# EUROPEAN PATENT APPLICATION

(11) **EP 4 691 915 A1**
(43) Date of publication of application: **11.02.2026**
(21) Application number: 24784819.5
(22) Date of filing: 28.03.2024
(51) Int. Cl.: B64D 37/30, B64D 27/12, B64D 41/00, F02C 7/22, F02C 9/28, H01M 8/04

(54) **HYDROGEN AIRCRAFT**

(30) Priority: 07.04.2023 JP 2023063026
(71) Applicant: KAWASAKI JUKOGYO KABUSHIKI KAISHA, Kobe-shi, Hyogo 650-8670 (JP)
(72) Inventor: KINOSHITA, Yasuhiro, Kobe-shi, Hyogo 650-8670 (JP); ISHIDA, Katsuhiko, Kobe-shi, Hyogo 650-8670 (JP)
(74) Representative: Dantz, Jan Henning
(86) International application number: PCT/JP2024/012582
(87) International publication number: WO 2024/210030

(57) **Abstract**

A hydrogen aircraft includes: an engine that generates flight thrust; a fuel tank storing hydrogen fuel in a liquid phase; a fuel supply passage connecting the fuel tank to the engine; a pump that is located in the fuel supply passage and pressurizes the hydrogen fuel from the fuel tank toward the engine; a control valve located downstream of the pump in the fuel supply passage; an auxiliary supply passage communicating with a portion of the fuel supply passage which is located between the pump and the control valve; and a hydrogen consumer connected to the auxiliary supply passage.

## Description

### Technical Field

The present disclosure relates to a hydrogen aircraft including an engine that combusts hydrogen fuel.

### Background Art

PTL 1 discloses a hydrogen fuel supply system for an aircraft. In this system, liquid hydrogen supplied from a fuel tank to an engine is heated by a heat exchanger.

### Citation List

### Patent Literature

PTL 1: U.S. Patent Application Publication No. 2022/0145801

### Summary of Invention

### Technical Problem

In the hydrogen fuel supply system, when the amount of fuel required by the engine decreases, excess fuel may be generated in a fuel supply passage. According to conventional aircrafts, the excess fuel is returned to the fuel tank through a bypass line. However, according to the aircraft that uses hydrogen fuel, since the fuel tank stores liquid hydrogen at ultra-cryogenic temperatures, it is difficult to return the excess hydrogen fuel from the fuel supply passage to the fuel tank.

An object of one aspect of the present disclosure is to provide a hydrogen aircraft that effectively processes excess hydrogen fuel generated in a fuel supply passage.

### Solution to Problem

A hydrogen aircraft according to one aspect of the present disclosure includes: an engine that generates flight thrust; a fuel tank storing hydrogen fuel in a liquid phase; a fuel supply passage connecting the fuel tank to the engine; a pump that is located in the fuel supply passage and pressurizes the hydrogen fuel from the fuel tank toward the engine; a control valve located downstream of the pump in the fuel supply passage; an auxiliary supply passage communicating with a portion of the fuel supply passage which is located between the pump and the control valve; and a hydrogen consumer connected to the auxiliary supply passage.

### Advantageous Effects of Invention

According to one aspect of the present disclosure, when excess hydrogen fuel is generated between a pump and a control valve in a fuel supply passage, the excess hydrogen fuel can be supplied through an auxiliary supply passage to auxiliary power equipment or a fuel cell. Therefore, the excess hydrogen fuel generated in the fuel supply passage can be effectively processed.

### Brief Description of Drawings

FIG. 1 is a plan view of a hydrogen aircraft according to Embodiment 1.
FIG. 2 is a sectional view of a gas turbine engine of the hydrogen aircraft of FIG. 1.
FIG. 3 is a block diagram of a hydrogen fuel supply system of FIG. 1.
FIG. 4 is a block diagram of the hydrogen fuel supply system according to Embodiment 2.

### Description of Embodiments

Hereinafter, embodiments will be described with reference to the drawings.

### Embodiment 1

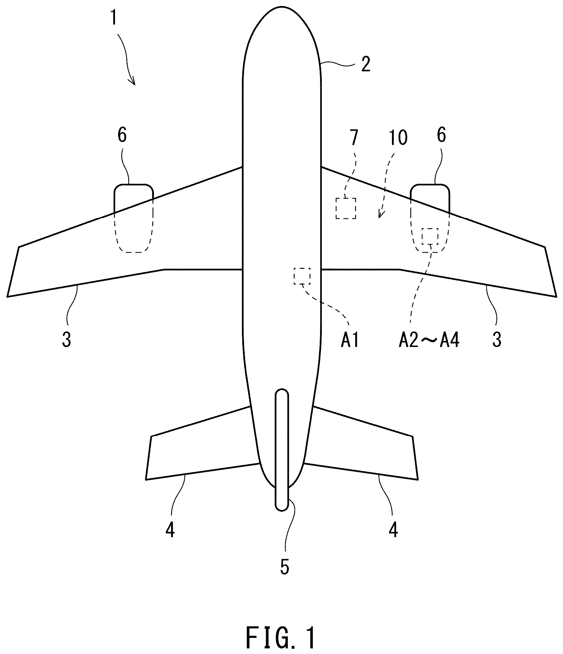

FIG. 1 is a plan view of a hydrogen aircraft 1 including a hydrogen fuel supply system 10 according to Embodiment 1. As shown in FIG. 1, the hydrogen aircraft 1 includes, for example, a fuselage 2, main wings 3, horizontal stabilizers 4, a vertical stabilizer 5, gas turbine engines 6, and auxiliary power equipment 7. The fuselage 2 extends in a front-rear direction of the hydrogen aircraft 1 and defines an occupant space therein. The main wings 3 are connected to an intermediate portion of the fuselage 2 in the front-rear direction and project from the fuselage 2 in a left-right direction of the aircraft 1. The horizontal stabilizers 4 project from a rear portion of the fuselage 2 in the left-right direction of the aircraft 1. The vertical stabilizer 5 projects upward from the rear portion of the fuselage 2. The gas turbine engines 6 are mounted on a pair of main wings 3. The hydrogen fuel supply system 10 is mounted on the main wings 3 and the gas turbine engines 6.

The auxiliary power equipment 7 (APU: Auxiliary Power Unit) is located closer to the main wings 3 than to the horizontal stabilizers 4 and the vertical stabilizer 5 in the hydrogen aircraft 1. The auxiliary power equipment 7 is a small engine that supplies compressed air, hydraulic pressure, or electric power to respective portions of the hydrogen aircraft 1. The auxiliary power equipment 7 is different from the gas turbine engines 6 for flight propulsion. The auxiliary power equipment 7 is one example of a hydrogen consumer. The auxiliary power equipment 7 is described as an example of the hydrogen consumer. However, instead of the auxiliary power equipment 7, a fuel cell that generates electric power by a reaction between hydrogen and oxygen may be used as the hydrogen consumer.

The auxiliary power equipment 7 is mounted on, for example, the main wing 3. However, the auxiliary power equipment 7 may be located at the fuselage 2. In this case, the auxiliary power equipment 7 may be located at a predetermined position A1 closer to the main wings 3 than to the horizontal stabilizers 4 and the vertical stabilizer 5 in the fuselage 2. Or, the auxiliary power equipment 7 may be located at any one of predetermined positions A2 to A4 of the gas turbine engine 6.

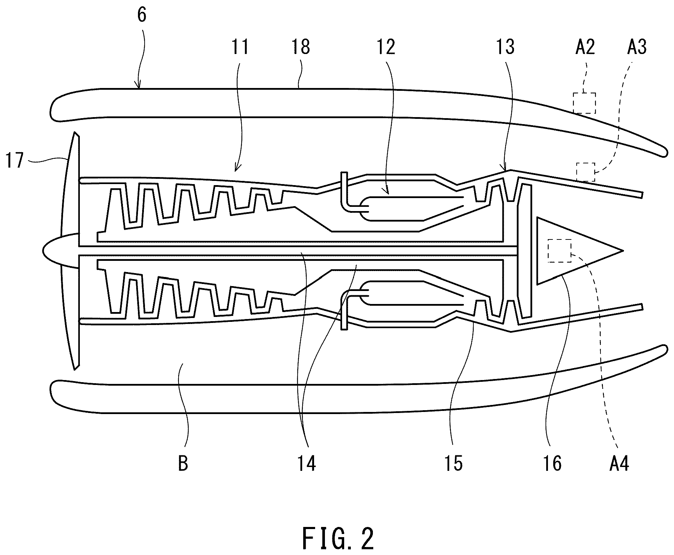

FIG. 2 is a sectional view of the gas turbine engine 6 of the hydrogen aircraft 1 of FIG. 1. As shown in FIG. 2, the gas turbine engine 6 includes a compressor 11, a combustor 12, a turbine 13, a rotating shaft 14, a casing 15, a tail cone 16, a fan 17, and a nacelle 18. In the gas turbine engine 6, air introduced into the casing 15 from the outside is compressed by the compressor 11, and the compressed air compressed by the compressor 11 is guided to the combustor 12. Hydrogen fuel is combusted in the combustor 12 together with the compressed air, and energy of the obtained high-temperature high-pressure combustion gas is taken out as rotational power in the turbine 13.

The turbine 13 is coupled to the compressor 11 through the rotating shaft 14. The fan 17 is connected to a front end portion of the rotating shaft 14. The rotational power generated by the turbine 13 drives the compressor 11 and the fan 17. The nacelle 18 is located outside the casing 15 in a radial direction. A space between the casing 15 and the nacelle 18 serves as a bypass passage B through which the air delivered rearward by the fan 17 flows. The tail cone 16 is located downstream of the turbine 13 in the casing 15. The tail cone 16 defines, from a radially inner side, a passage through which the combustion gas delivered rearward from the turbine 13 flows. A turbo fan engine is described as an example of the gas turbine engine 6. However, the type of the gas turbine engine 6 is not limited to this.

The auxiliary power equipment 7 (see FIG. 1) may be located at the predetermined position A2 of the nacelle 18 of the gas turbine engine 6. The auxiliary power equipment 7 may be located at the predetermined position A3 in the bypass passage B of the gas turbine engine 6. The auxiliary power equipment 7 may be located at the predetermined position A4 in an internal space of the tail cone 16 of the gas turbine engine 6.

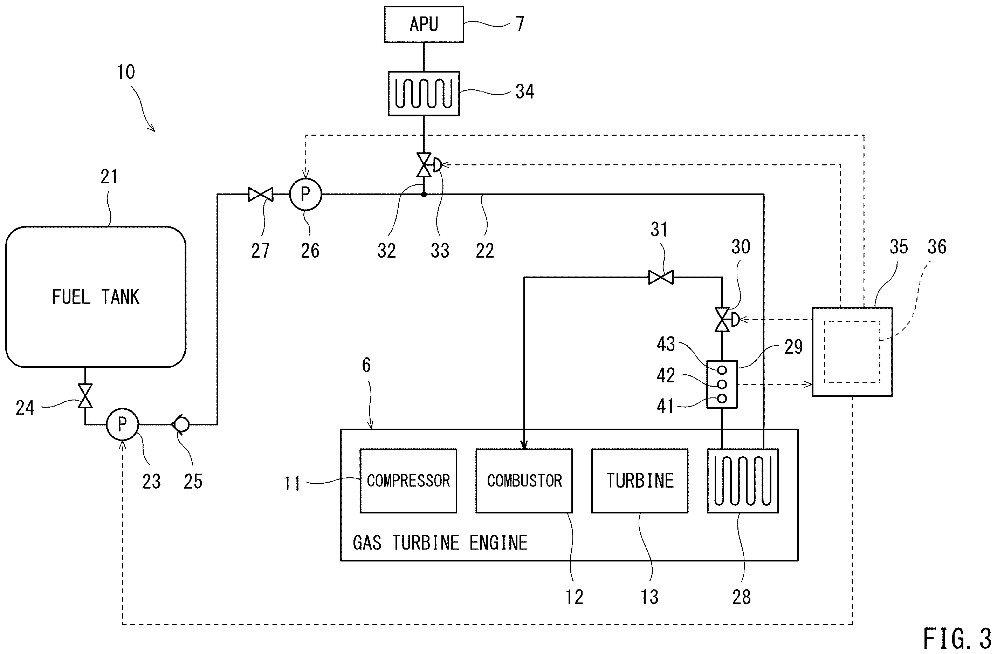

FIG. 3 is a block diagram of the hydrogen fuel supply system 10 of FIG. 1. As shown in FIG. 3, the hydrogen fuel supply system 10 includes a fuel tank 21. The fuel tank 21 stores the hydrogen fuel in a liquid phase. The fuel tank 21 is mounted on the fuselage 2, the main wing 3, or both of the fuselage 2 and the main wing 3. The fuel tank 21 is connected to the gas turbine engine 6 by a fuel supply passage 22. When the fuel tank 21 is located in the fuselage 2, the fuel supply passage 22 extends from the fuselage 2 through the main wing 3 to the gas turbine engine 6 and is connected to the combustor 12. When the fuel tank 21 is located in the main wing 3, the fuel supply passage 22 extends from the main wing 3 to the gas turbine engine 6 and is connected to the combustor 12.

A feed pump 23 is located in the fuel supply passage 22. The feed pump 23 supplies the hydrogen fuel from the fuel tank 21 to the fuel supply passage 22. A shutoff valve 24 is located between the fuel tank 21 and the feed pump 23 in the fuel supply passage 22. A check valve 25 is located downstream of the feed pump 23 in the fuel supply passage 22.

A pressure pump 26 is located downstream of the check valve 25 in the fuel supply passage 22. The pressure pump 26 pressurizes the hydrogen fuel in the fuel supply passage 22. For example, the pressure pump 26 pressurizes the liquid-phase hydrogen fuel supplied from the fuel tank 21 such that the pressure of the hydrogen is higher than predetermined pressure when the hydrogen fuel flowing through the fuel supply passage 22 has reached a below-described main control valve 30. A shutoff valve 27 is located between the check valve 25 and the pressure pump 26 in the fuel supply passage 22.

A main heat exchanger 28 is located downstream of the pressure pump 26 in the fuel supply passage 22. The main heat exchanger 28 heats the hydrogen fuel flowing through the fuel supply passage 22. The main heat exchanger 28 is thermally connected to the gas turbine engine 6. To be specific, the main heat exchanger 28 heats the hydrogen fuel in the fuel supply passage 22 by utilizing the heat of the gas turbine engine 6.

A sensor 29 is located downstream of the main heat exchanger 28 in the fuel supply passage 22. The sensor 29 includes a flow meter 41, a pressure gauge 42, and a thermometer 43. To be specific, the sensor 29 measures the flow rate, pressure, and temperature of the hydrogen fuel which has flowed through the main heat exchanger 28. The sensor 29 is located downstream of the main heat exchanger 28. It is desirable that no other fluid devices be located between the main heat exchanger 28 and the sensor 29 in the fuel supply passage 22.

As a control valve, the main control valve 30 is located downstream of the sensor 29 in the fuel supply passage 22. The main control valve 30 adjusts the flow rate of the hydrogen fuel which has flowed through the main heat exchanger 28 and the sensor 29. To be specific, the sensor 29 is located between the main control valve 30 and the main heat exchanger 28 in the fuel supply passage 22. It is desirable that no other fluid devices be located between the main control valve 30 and the sensor 29 in the fuel supply passage 22. A shutoff valve 31 is located downstream of the control valve 30 in the fuel supply passage 22. The presence and arrangement of the shutoff valves 24, 27, 31 are optional.

An auxiliary supply passage 32 is connected to a portion of the fuel supply passage 22 which is located downstream of the pressure pump 26. For example, the auxiliary supply passage 32 is connected to a portion of the fuel supply passage 22 which is located between the pressure pump 26 and the main heat exchanger 28. The auxiliary supply passage 32 connects the fuel supply passage 22 to the auxiliary power equipment 7. As a second control valve, a sub-control valve 33 is located in the auxiliary supply passage 32. The sub-control valve 33 may be, for example, a normally closed valve. Instead of the sub-control valve 33, a relief valve that opens when pressure exceeds a threshold may be used.

A sub-heat exchanger 34 may be located in the auxiliary supply passage 32. The sub-heat exchanger 34 heats the hydrogen fuel flowing through the auxiliary supply passage 32. The sub-heat exchanger 34 may be thermally connected to the gas turbine engine 6. The sub-heat exchanger 34 may be a heater.

When the auxiliary power equipment 7 is located at the main wing 3, the entire auxiliary supply passage 32 may be located at the main wing 3. When the auxiliary power equipment 7 is located at the fuselage 2, the auxiliary supply passage 32 may extend through the main wing 3 to the fuselage 2. When the auxiliary power equipment 7 is located at the fuselage 2, the auxiliary supply passage 32 may be connected to a portion of the fuel supply passage 22 which exists in the fuselage 2. When the auxiliary power equipment 7 is located at the gas turbine engine 6, the auxiliary supply passage 32 may be connected to a portion of the fuel supply passage 22 which is located at the gas turbine engine 6.

The hydrogen fuel supply system 10 includes a controller 35. The controller 35 includes processing circuitry 36. The processing circuitry 36 includes a processor, a system memory, and a storage memory. The processor is, for example, a CPU. The system memory is, for example, a RAM. The storage memory is a hard disk, a flash memory, or a combination thereof. A configuration in which the processor executes the program stored in the storage memory and read out into the system memory is one example of the processing circuitry 36. The processing circuitry 36 is configured to control the feed pump 23, the pressure pump 26, the main control valve 30, and the sub-control valve 33 in accordance with a detection signal of the sensor 29.

The processing circuitry 36 drives the feed pump 23 upon receiving an engine start command. The processing circuitry 36 controls the pressure pump 26 to pressurize the hydrogen fuel in the fuel supply passage 22. The processing circuitry 36 controls the main control valve 30 such that the flow rate detected by the sensor 29 becomes a target flow rate. When the pressure detected by the sensor 29 is lower than predetermined pressure, or when the temperature detected by the sensor 29 is lower than a predetermined temperature, the processing circuitry 36 outputs an alert. When the pressure detected by the sensor 29 is lower than the predetermined pressure, the processing circuitry 36 may control the pressure pump 26 such that the pressure detected by the sensor 29 exceeds the predetermined pressure.

Moreover, when the temperature detected by the sensor 29 is lower than the predetermined temperature, the processing circuitry 36 may control the amount of heat input to the liquid hydrogen per unit density in the heat exchanger 28 such that the temperature detected by the sensor 29 exceeds the predetermined temperature. For example, when the heat exchanger 28 utilizes a heat source of the engine as a medium, a heat shield may be located upstream of the heat exchanger 28, and an actuator for the heat shield may be controlled to change an area where the heat shield covers the heat exchanger 28.

When the pressure detected by the sensor 29 is a predetermined threshold TH1 or less, the processing circuitry 36 keeps the sub-control valve 33 closed. When the pressure detected by the sensor 29 exceeds the threshold TH1, the processing circuitry 36 controls the sub-control valve 33 to open the sub-control valve 33. The threshold TH1 may be a variable threshold. The hydrogen supplied from the auxiliary supply passage 32 to the auxiliary power equipment 7 by the opening of the sub-control valve 33 is consumed as the fuel of the auxiliary power equipment 7. The pressure that the processing circuitry 36 refers to for the control of the sub-control valve 33 may be pressure downstream of the pressure pump 26 and may be detected by a pressure sensor located at a portion of the fuel supply passage 22 which is located between the pressure pump 26 and the main heat exchanger 28.

When the flow rate detected by the main control valve 30 is a predetermined threshold TH2 or less, the processing circuitry 36 keeps the sub-control valve 33 closed. When the flow rate detected by the main control valve 30 exceeds the threshold TH2, the processing circuitry 36 controls the sub-control valve 33 to open the sub-control valve 33. The threshold TH2 may be a variable threshold. The hydrogen supplied from the auxiliary supply passage 32 to the auxiliary power equipment 7 by the opening of the sub-control valve 33 is consumed as the fuel of the auxiliary power equipment 7. The flow rate that the processing circuitry 36 refers to for the control of the sub-control valve 33 may be the flow rate downstream of the pressure pump 26 and may be detected by a flow rate sensor located at a portion of the fuel supply passage 22 which is located between the pressure pump 26 and the main heat exchanger 28.

According to the above configuration, when the opening degree of the main control valve 30 decreases, and this generates excess hydrogen fuel in a portion of the fuel supply passage 22 which is located between the pressure pump 26 and the main control valve 30, the excess hydrogen fuel can be supplied through the auxiliary supply passage 32 to the auxiliary power equipment 7. Therefore, the excess hydrogen fuel generated in the fuel supply passage 22 can be effectively processed.

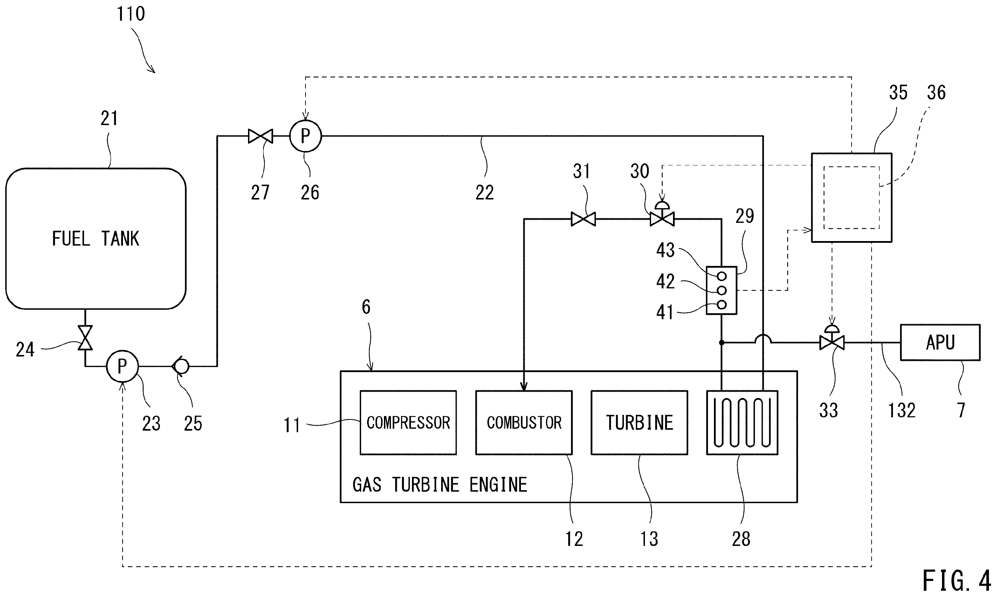

FIG. 4 is a block diagram of a hydrogen fuel supply system 110 according to Embodiment 2. The same reference signs are used for the same components as in Embodiment 1, and the repetition of the same explanation is avoided. As shown in FIG. 4, the hydrogen fuel supply system 110 of Embodiment 2 is different from the hydrogen fuel supply system 10 of Embodiment 1 in that: a connection position of an auxiliary supply passage 132 connected to the fuel supply passage 22 is different; and the sub-heat exchanger is omitted from the auxiliary supply passage 132.

The auxiliary supply passage 132 is connected to a portion of the fuel supply passage 22 which is located downstream of the heat exchanger 28. For example, the auxiliary supply passage 132 is connected to a portion of the fuel supply passage 22 which is located between the heat exchanger 28 and the sensor 29. When the sub-control valve 33 opens, the hydrogen fuel which has been increased in temperature by the heat exchanger 28 is introduced to the auxiliary supply passage 132. Thus, it becomes unnecessary to locate the heat exchanger in the auxiliary supply passage 132, and this reduces the number of parts. Since the other components are the same as those in Embodiment 1, explanations thereof are omitted.

The foregoing has described the embodiments as examples of the technology disclosed in the present application. However, the technology in the present disclosure is not limited to these and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The functionality of the elements disclosed herein may be implemented using circuitry or processing circuitry which includes general purpose processors, special purpose processors, integrated circuits, ASICs ("Application Specific Integrated Circuits"), FPGAs ("Field Programmable Gate Arrays"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The following aspects disclose preferred embodiments.

### First Aspect

A hydrogen aircraft including:
an engine that generates flight thrust;
a fuel tank storing hydrogen fuel in a liquid phase;
a fuel supply passage connecting the fuel tank to the engine;
a pump that is located in the fuel supply passage and pressurizes the hydrogen fuel from the fuel tank toward the engine;
a control valve located downstream of the pump in the fuel supply passage;
an auxiliary supply passage communicating with a portion of the fuel supply passage which is located between the pump and the control valve; and
a hydrogen consumer connected to the auxiliary supply passage.

According to this configuration, when excess hydrogen fuel is generated in a portion of the fuel supply passage which is located between the pump and the control valve, the excess hydrogen fuel can be supplied through the auxiliary supply passage to auxiliary power equipment or a fuel cell. Therefore, the excess hydrogen fuel generated in the fuel supply passage can be effectively processed.

### Second Aspect

The hydrogen aircraft according to the first aspect, further including a second control valve located in the auxiliary supply passage.

According to this configuration, the flow rate of the hydrogen fuel flowing from the fuel supply passage toward the hydrogen consumer can be adjusted.

### Third Aspect

The hydrogen aircraft according to the first or second aspect, wherein the hydrogen consumer includes auxiliary power equipment or a fuel cell.

According to this configuration, while the engine that generates the flight thrust is in a stop state, the excess hydrogen fuel generated in the fuel supply passage can be utilized as an energy source for the aircraft.

### Fourth Aspect

The hydrogen aircraft according to the third aspect, wherein:
the engine is mounted on a main wing of the hydrogen aircraft; and
the auxiliary power equipment or the fuel cell is located at a position closer to the main wing than to an empennage in the hydrogen aircraft.

According to this configuration, the auxiliary supply passage can be made short, and this can reduce the weight of the aircraft.

### Fifth Aspect

The hydrogen aircraft according to the fourth aspect, wherein the auxiliary power equipment or the fuel cell is mounted on the main wing.

According to this configuration, the auxiliary supply passage does not have to be located in the fuselage of the aircraft, and this can prevent the space in the fuselage from being occupied.

### Reference Signs List

- 1: hydrogen aircraft
- 2: fuselage
- 3: main wing
- 4: horizontal stabilizer
- 5: vertical stabilizer
- 6: gas turbine engine
- 7: auxiliary power equipment (hydrogen consumer)
- 10, 110: hydrogen fuel supply system
- 21: fuel tank
- 22: fuel supply passage
- 26: pressure pump
- 28: main heat exchanger
- 29: sensor
- 30: main control valve
- 32, 132: auxiliary supply passage
- 33: sub-control valve
- 36: processing circuitry

## Claims

1. A hydrogen aircraft comprising:
an engine that generates flight thrust;
a fuel tank storing hydrogen fuel in a liquid phase;
a fuel supply passage connecting the fuel tank to the engine;
a pump that is located in the fuel supply passage and pressurizes the hydrogen fuel from the fuel tank toward the engine;
a control valve located downstream of the pump in the fuel supply passage;
an auxiliary supply passage communicating with a portion of the fuel supply passage which is located between the pump and the control valve; and
a hydrogen consumer connected to the auxiliary supply passage.

2. The hydrogen aircraft according to claim 1, further comprising a second control valve located in the auxiliary supply passage.

3. The hydrogen aircraft according to claim 1 or 2, wherein the hydrogen consumer includes auxiliary power equipment or a fuel cell.

4. The hydrogen aircraft according to claim 3, wherein:
the engine is mounted on a main wing of the hydrogen aircraft; and
the auxiliary power equipment or the fuel cell is located at a position closer to the main wing than to an empennage in the hydrogen aircraft.

5. The hydrogen aircraft according to claim 4, wherein the auxiliary power equipment or the fuel cell is mounted on the main wing.
